# EUROPÄISCHE PATENTANMELDUNG

(11) **EP 0 784 016 A1**
(43) Veröffentlichungstag der Anmeldung: **16.07.1997**
(21) Anmeldenummer: 96119242.4
(22) Anmeldetag: 30.11.1996
(51) Int. Cl.: B65D 21/02, B21D 22/26

(54) **Stapelbare Ziehteile, sowie ein Verfahren und eine Vorrichtung zur Herstellung derselben**

(30) Priorität: 11.01.1996 DE 19600755
(71) Anmelder: MERCEDES-BENZ AG, 70327 Stuttgart (DE)
(72) Erfinder: Waldhauser, Franz, 71063 Sindelfingen (DE); Much, Wolfgang, 72135 Dettenhausen (DE)

(57) **Zusammenfassung**

Die Erfindung betrifft stapelbare Ziehteile (2), insbesondere aus Blech, sowie ein Verfahren und eine Vorrichtung zur Herstellung derselben mit in das Ziehteil integrierten wulstartig gezogenen Distanznoppen (4), die sich aus einer quer zur Aufstapelrichtung liegenden Wandung (3) des Ziehteiles soweit erheben, daß die quer zur Aufstapelrichtung liegenden Wandungen der Ziehteile einen solchen gegenseitigen Abstand aufweisen, daß die spitzwinklig zur Aufstapelrichtung der Ziehteile liegenden Wandungen sich höchstens lose berühren und mit Sicherheit verklemmungsfrei ineinandergreifen, wobei die Distanznoppen der Ziehteile derart ausgebildet sind, daß die im Stapel lagegleich übereinanderliegend angeordneten Distanznoppen eine gemeinsame etwa mittig verlaufende, parallel zur Aufstapelrichtung stehende Achse aufweisen. Um das verklemmungsfreie Stapeln der Ziehteile noch einfacher zu gestaltet, wird vorgeschlagen, daß die Distanznoppen untereinander nach Bemaßung und Ausrichtung gleich ausgebildet sind und daß der Durchmesser der jeweiligen Noppenöffnung (5) auf mindestens einem Teilumfangsbereich kleiner ist als der Durchmesser des Noppengrundes (8), wobei der Durchmesser und die Ausbildung des Noppengrundes und der Noppenöffnung in diesem Teilumfangsbereich derart aufeinander abgestimmt sind, daß im Stapel die Ziehteile kippstabil aufeinander zu liegen kommen.

## Beschreibung

Die Erfindung betrifft Stapelbare Ziehteile, sowie ein Verfahren und eine Vorrichtung zur Herstellung derselben gemäß dem Oberbegriff des Patentanspruches 1 bezüglich der Ziehteile, gemäß dem Oberbegriff des Patentanspruches 5 bezüglich des Verfahrens und gemäß dem Oberbegriff des Patentanspruches 10 bezüglich der Vorrichtung.

Gattungsgemäße Ziehteile, sowie ein gattungsgemäßes Verfahren und eine gattungsgemäße Vorrichtung zu Herstellung derselben ist aus der DE 43 12 287 C1 bekannt. Um ein Verklemmen der Ziehteile zu verhindern wird dort ein Drehstempel zur Ausbildung von Distanznoppen mit einem zugeordneten Drehantrieb vorgesehen, der - ausgehend von einem ersten mit Distanznoppen zu versehenden Ziehteil - zumindest bei dem nachfolgend umzuformenden Ziehteil eine andere Drehlage aufweist. Durch die unterschiedliche Ausrichtung der wulstartigen Distanznoppen bei einander nächst und übernächst benachbarten Ziehteilen wird dabei ein Verklemmen der Ziehteile im Stapel verhindert. Die Herstellung und Steuerung des Drehstempels ist relativ aufwendig. Gleichzeitig muß bei einer Prüfkontrolle von mehreren aufeinanderfolgenden Ziehteilen die Stapelung unterbrochen werden, da nicht gesichert ist, ob das nächste zu stapelnde Ziehteil derart ausgebildete Distanznoppen aufweist, daß dieses nicht im bislang obersten gestapelten Ziehteil verklemmt.

Der Erfindung liegt die Aufgabe zugrunde, das gattungsgemäße Ziehteil bzw. die Vorrichtung und das Verfahren zur Herstellung des Ziehteiles dahingehend weiterzubilden, daß das verklemmungsfreie Stapeln der Ziehteile einfacher gestaltet werden kann.

Die Aufgabe ist erfindungsgemäß durch die im Patentanspruch 1 hinsichtlich der Ziehteile, in einem der Patentansprüche 5 bis 8 hinsichtlich des Verfahrens und in einem der Patentansprüche 10, 16 und 17 hinsichtlich der Vorrichtung angegebenen kennzeichnenden Merkmale gelöst.

Dank der Erfindung entfällt ein Drehantrieb für den die Distanznoppen erzeugenden Drehstempel wie gleichermaßen dessen Drehlagerung. Dafür werden die Distanznoppen bei allen Ziehteilen in formidentischer Weise und gleichen Bemaßungen und gleicher Ausrichtung gezogen, worauf Vorrichtungen eingesetzt werden, die die gleich ausgebildeten Distanznoppen derart verformen, daß durch die unterschiedlichen Durchmesser von Noppenöffnung und Noppengrund bzw. freiem Ende der Distanznoppen eine Verklemmung der umgeformten Ziehteile bei einer Stapelung verhindert wird. Durch die gleichförmige Ausbildung der untereinander nicht verklemmbaren Ziehteile können auch mehrere Ziehteile hintereinander zur Prüfung dem Fertigungsvorgang entnommen werden ohne daß der weitere Stapelvorgang unterbrochen werden muß. Die Verformung der Distanznoppen kann bei Ziehteilen mit hohem Umformschwierigkeitsgrad wie beispielsweise Türinnenbleche besonders rationell vonstatten gehen, da diese Ziehteile in mehreren Arbeitsschritten (Stufen, bzw. Hüben) gezogen werden müssen und somit eine zu diesen Arbeitsschritten parallele Verformung möglich ist. Die Distanznoppen können in einem separaten Ziehvorgang während den ersten Umformstufen des Ziehteils oder auch gleichzeitig mit einem Umformschritt, der die Formgebung des Ziehteils betrifft, gezogen werden.

Zweckmäßige Ausgestaltungen der Erfindung können den Unteransprüchen entnommen werden; im übrigen ist die Erfindung anhand mehreren in den Zeichnungen dargestellten Ausführungsbeispielen nachfolgend näher erläutert; dabei zeigt:
Fig. 1 in einer Schnittdarstellung einen Stapel von Ziehteilen mit erfindungsgemäß ausgebildeten übereinanderliegenden Distanznoppen,
Fig. 2a in einem seitlichen Längsschnitt den Aufweitstempel für die Distanznoppen mit endseitig angeordneten radialen Öffnungen beim Verformen des gezogenen Distanznoppens,
Fig. 2b den Distanznoppen aus Fig. 2a in einem Schnitt entlang der Linie IIb-IIb,
Fig. 3a in einem seitlichen Längsschnitt den Aufweitstempel für die Distanznoppen mit endseitig angeordneten Schiebern beim Verformen des gezogenen Distanznoppens,
Fig. 3b einen Abschnitt des Aufweitstempels aus Fig. 3a in einem Schnitt entlang der Linie IIIb-IIIb,
Fig. 4 in einem seitlichen Längsschnitt den Aufweitstempel für die Distanznoppen mit einer endseitig angeordneten elastisch wirkenden Platte mit nach außen drängbaren Wulsten,
Fig. 5 in einem seitlichen Längsschnitt den gezogenen Distanznoppen und zwei seitliche Verformungsschieber,
Fig. 6 in einem seitlichen Längsschnitt den gezogenen Distanznoppen und einen koaxial zu diesem beweglichen Gegenstempel,
Fig. 7a in einem seitlichen Längsschnitt den gezogenen Distanznoppen mit längs verlaufenden Einschnitten und einem Gegenhalter,
Fig. 7b den Distanznoppen aus Fig. 7a in einer seitlichen Ansicht in einem Schnitt entlang der Linie VIIb-VIIb,
Fig. 7c den Distanznoppen aus Fig. 7a in einer Draufsicht mit zwei quer zur Ziehrichtung des Distanznoppens beweglichen Schiebern.

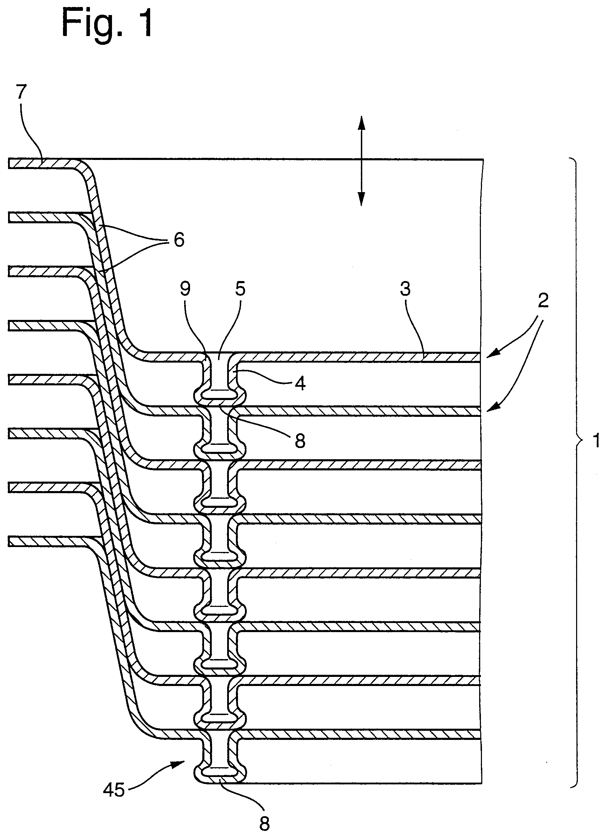

In Fig. 1 ist ein Stapel 1 von wannenförmigen Ziehteilen 2 aus einem ziehbaren Material, vorzugsweise aus Blech oder Kunststoff, dargestellt, die ineinander in Stapelrichtung (Doppelpfeil) aufeinandergelegt sind. Dabei weisen quer zur Stapelrichtung liegende Wandungen 3 der Ziehteile 2 wulstförmige Distanznoppen 4 auf, die vertikal nach unten abstehen und ein Ziehteil vom jeweils darunterliegenden auf Abstand halten. Die Distanznoppen 4 können jedoch auch statt vertikal nach unten vertikal nach oben abstehen.

Die Distanznoppen 4 der übereinanderliegenden Teile 2 sind ortsgleich zueinander angeordnet. So sitzt jeweils eine Noppe 4 auf der Wandung 3 des darunterliegenden Ziehteils 2 auf und überragt mit ihrem Noppengrund 8 zumindest an zwei gegenüberliegenden Stellen dabei den Rand 9 der Noppenöffnung 5 dieses Ziehteils, so daß ein Verklemmen der Noppen ineinander verhindert wird. Der Noppengrund 8 weist dazu einen größeren Durchmesser auf als die Noppenöffnung 5, derart, daß die Ziehteile bei der Stapelung und im Stapel kippstabil aufeinander zu liegen kommen. Die Höhe der Distanznoppen 4 ist derart, daß sich die an die Wandungen 3 anschließenden und von diesen spitzwinklig abgewinkelten Seitenwandungen 6 der Ziehteile 2 untereinander nur lose berühren, so daß der parallel zu den Wandungen 3 liegende gebogene Rand 7 derart von den Rändern der nächstliegenden Ziehteile 2 beabstandet sind, daß eine Vereinzelung der Teile problemlos gehandhabt werden kann. Durch die besondere Ausbildung der Distanznoppen 4 bzw. durch den größeren Durchmesser des Noppengrundes 8 in Bezug auf den der Noppenöffnung 5 kann aus der laufenden Fertigung oder aus dem Stapel 1 gelegentlich ein einzelnes Ziehteil 2 entnommen werden, ohne daß das nächst folgende Ziehteil mit dem darunter liegenden zusammenklemmt.

Die Ziehteile 2 können beispielsweise Türinnenbleche sein, die in der Regel einen schwierigen Umformungsgrad aufweisen. Die Türinnenbleche besitzen Stanzlöcher für Aufnahmebolzen, so daß es vom optischen Eindruck der Gesamtfläche des Türinnenbleches und aufgrund von in geringem Maße vorhandenen freien Applikationsflächen auf dem Türinnenblech besonders günstig ist, die Distanznoppe 4 an der Stelle der zu erzeugenden Stanzlöcher auszubilden und dannach das Stanzloch im Noppengrund 8 auszustanzen.

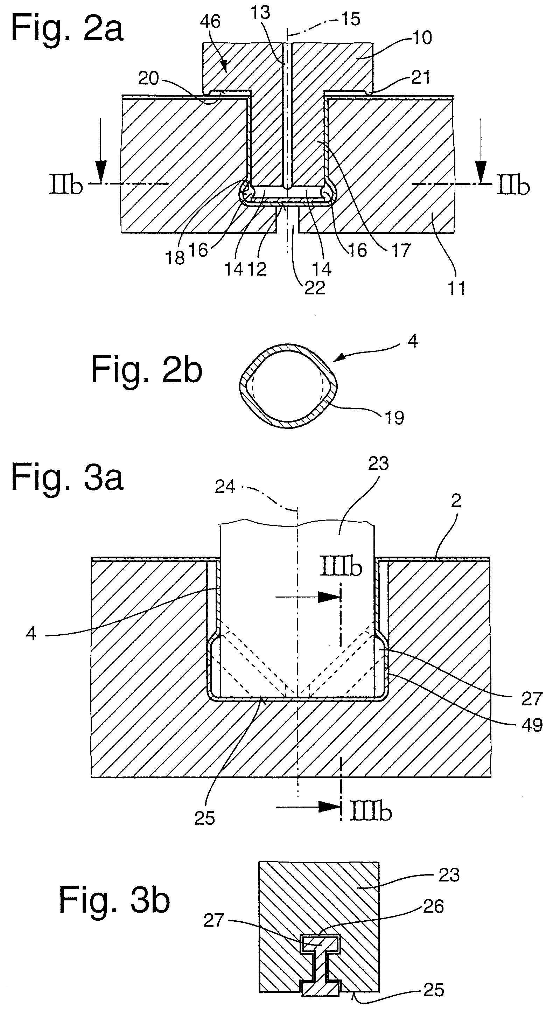

Zur Erzeugung der unterschiedlichen Durchmesser von Noppenöffnung 5 und Noppengrund 8 werden in Fig. 2-7 einige Möglichkeiten detaillierter aufgezeigt.

In Fig. 2a wird nach dem Ziehen des jeweiligen Distanznoppens 4 ein Aufweitstempel 10 mit einem zylindrischen Abschnitt 17 in den Distanznoppen 4, der sich noch innerhalb der Ziehmatrize 11 befindet, hineinverfahren, bis der Aufweitstempel 10 mit seiner Stirnseite 12 den Noppengrund 8 erreicht. Im Aufweitstempel 10 verläuft ein zentraler Kanal 13 zur Führung eines Fluides, wie beispielsweise Wasser, Öl, Luft oder ein Inertgas, der sich nahe der Stirnseite 12 des Aufweitstempels 10 in zwei Zuführungskanäle 14 aufteilt. Diese verlaufen radial zur Stempelachse 15 und münden in am Umfang des Aufweitstempels 10 angeordneten Öffnungen 16 im Bereich des Noppengrundes 8 aus. Der Kanal 13 ist mit einer Druckmittelquelle verbunden, über die ein Fluiddruck erzeugt wird, mittels dem im Bereich der Öffnungen 16 der Distanznoppen 4 radial aufgeweitet wird. Dazu weist die Ziehmatrize 11 an diesen Stellen eine Ausnehmung 18 auf, so daß das Ziehteilmaterial in diese hineinverdrängt werden kann. Wie in Fig. 2b verdeutlicht wird, wird aus dem ursprünglich über die gesamte Länge des Distanznoppens 4 gleichgroßen und gleichförmig zylindrischen Durchmesser im Bereich des Noppengrundes 8 ein Oval 19 herausgebildet, das den Grundkreis des Zylinders in sich trägt. Der Durchmesser des Noppengrundes 8 wird somit gegenüber der Noppenöffnung 5 vergrößert. Der Aufweitstempel 10 ist außerhalb des Distanznoppens 4 unter Ausbildung einer ringförmig umlaufenden Stufe 20 an seiner Wurzel 46 radial erweitert, wobei die Stufe 20 einen zur Ziehmatrize 11 abstehenden Ringwulst 21 aufweist, der das Ziehteil 2 nach Art eines Niederhalters an die Ziehmatrize 11 anpreßt. Gleichzeitig dichtet der Ringwulst 21 zusätzlich gegen den Fluiddruck ab, so daß einerseits bei der Verformung des Noppengrundbereiches ein Druckabfall durch eine Leckageströmung und damit eine ungleichmäßige Verformung und andererseits ein unkontrolliertes Austreten des Fluides und damit ein Fluidmengenverlust verhindert wird. Die Ziehmatrize 11 besitzt unterseitig des Noppengrundes 8 eine zu diesem zentrische Durchgangsbohrung 22. Durch diese kann ein Stanzstempel auf den Noppengrund 8 geführt werden, um aus diesem das oben erwähnte Aufnahmeloch für den Aufnahmebolzen zu stanzen. Der Noppengrund 8 kann prinzipiell - und nicht nur bei diesem Ausführungsbeispiel - eine vorgestanzte Öffnung aufweisen, die allerdings im Durchmesser wesentlich kleiner ist als die Noppenöffnung 5. Diese erleichtert ein Aufweiten des Bereiches des Noppengrundes 8, also des freien Endes 45 des Distanznoppens 4. Allerdings muß in diesem Ausführungsbeispiel der Aufweitstempel 10 mit seiner Stirnseite 12 mit hoher Kraft am Noppengrund 5 anliegen um ein Entweichen von Druckflüssigkeit aus dem Noppen zu vermeiden.

In Fig. 3a weist der Aufweitstempel 23 zwei bezüglich der Stempelachse 24 einander gegenüberliegende, schräg, vorzugsweise unter 45°, von der Stirnseite 25 des Aufweitstempels 23 - achsennah - aus bis zu dessen Umfang durchgehend verlaufende Führungskanäle 26 aufweist, in denen jeweils ein Schrägschieber 27 verliersicher geführt ist. Der Schrägschieber 27 ragt in Nichtgebrauchsstellung aus dem Aufweitstempel 23 an dessen Stirnseite 25 heraus und ist durch einen umlaufenden Sicherungsring oder einer Feder gegenüber einem Herausgleiten aus dem Führungskanal 26 in einer Ausgangsstellung gesichert. Der Schrägschieber 27 und der Führungskanal 26 sind (Fig. 3b) im Querschnitt wie ein um 90° Grad gedrehtes H gestaltet, können jedoch auch T-förmig ausgebildet sein. Beim Annähern des in den Distanznoppen eingetauchten Aufweitstempels 23 an den Noppengrund 8 treffen die Schrägschieber 27 mit ihrer Stirnseite 25 zuerst auf diesen auf, worauf die Schieber 27 in ihren Führungen 26 schräg nach außen und oben verschoben werden. Dadurch wird der Distanznoppen 4 im Bereich des Noppengrundes 8 aufgeweitet, wobei an den Stellen der Kanalöffnungen im Umfang des Aufweitstempels 23 die Ziehmatrize 11 jeweils eine Ausnehmung 49 aufweist, in die das Ziehteilmaterial hineinverdrängt werden kann. Die Ausnehmung 49 verläuft dabei vom Noppengrund 8 aus bis zur Noppenöffnung 5 axial durchgängig, so daß der umgeformte Noppen 4 ohne weiteres der Ziehmatrize 11 entnehmbar ist. Analog zum Ausführungsbeispiel aus Fig. 2a,b wird der Durchmesser des Noppengrundes 8 bzw. des Bereiches des freien Endes 45 des Distanznoppens 4 gegenüber der Noppenöffnung 5 an zwei gegenüberliegenden Teilumfangsbereichen des Distanznoppens 4 durch die Schiebereinwirkung zu einem Oval vergrößert.

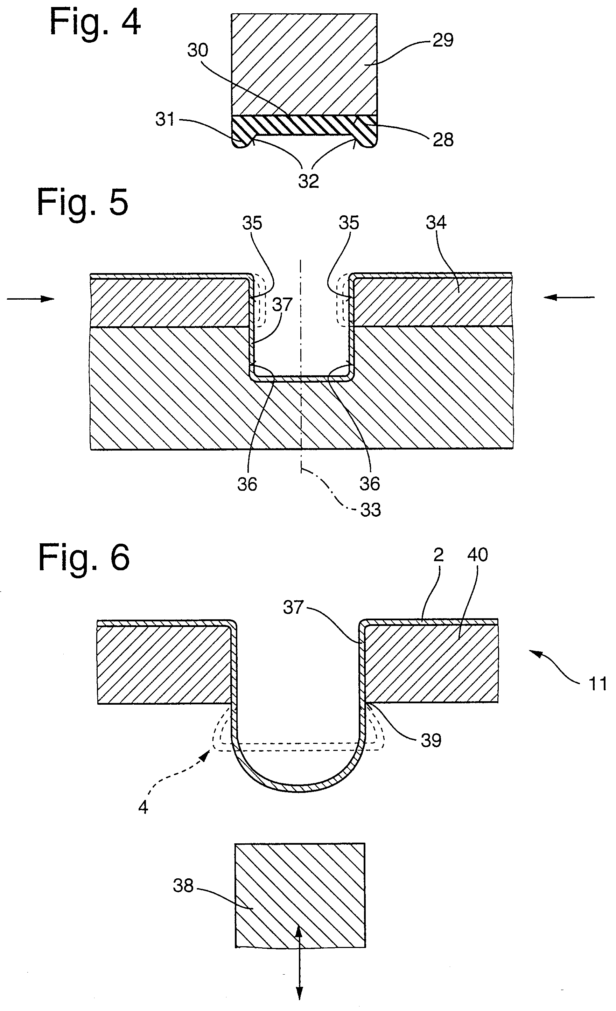

In Fig. 4 ist an der Stirnseite 28 des Aufweitstempel 29 eine diese abdeckende Platte 30 aus einem elastischen Material, vorzugsweise aus Hartgummi, angebracht. Die Platte 30 weist am Rand zwei Wulste 31 auf, deren innenliegende Flanken 32 derart angeschrägt sind, daß die Wulste 31 bei axialer Beaufschlagung des Noppengrundes 8 durch den Aufweitstempel 29 radial nach außen gedrückt und die Platte 30 flachgedrückt werden, worauf das dort befindlich Ziehteilmaterial nach außen gedrückt wird. Matrizenseitig ist an der Stelle der Wulste 31 in Gebrauchslage des Stempels 29 jeweils die Ausnehmung 18 der Ziehmatrize 11 angeordnet. Die Platte 30 kann auch als beliebig gestaltetes Gummikissen ausgebildet sein.

Desweiteren ist es denkbar, ein Aufweiten des Bereiches des Noppengrundes 8 mit einem Aufweitstempel zu erreichen, in dem ein Schieber mit zur Stempelachse paralleler Schieberachse angeordnet ist, der in Achsrichtung beweglich ist und bevorzugt koaxial zum Stempel gelegen ist. Der Schieber überragt in Nichtgebrauchsstellung die Stirnseite des Stempels und steht in einer Wirkverbindung mit zwei im Stempel drehbar gelagerten Schwenkschiebern, die die gleiche Drehachse aufweisen und mit ihrem freien Ende bündig mit dem Umfang des Stempels im Bereich der Stirnseite abschließen. Bei Annäherung des Stempels an den Noppengrund 8 trifft zuerst auf diesem der in Achsrichtung bewegliche Schieber auf und wird dadurch in den Stempel hineingeschoben. Dabei betätigt er beide Schwenkschieber gleichzeitig, die dann unter Verstellkraft des mittig liegenden Schiebers mit ihrem freien Ende aus dem Stempel herausschwenken. Durch das Herausschwenken der Schwenkschieber wird das dort befindliche Material des Distanznoppens zur Seite gedrängt, wobei die Ziehmatrize 11 am Ort der freien Enden der Schwenkschieber die Ausnehmung 18 besitzt, in die das Material des Noppens 4 bzw. des Ziehteils 2 hineingepreßt wird.

Weiterhin ist es denkbar, in den in der Ziehmatrize 11 befindlichen Distanznoppen 4 eine Patrone mit Sprengstoffinhalt einzulegen. Beim Auftreffen des Aufweitstempels auf die Patrone entzündet sich diese, worauf Material des Distanznoppens 4 im Bereich des Noppengrundes unter Explosionsdruck in die Ausnehmung 18 der Ziehmatrize 11 hineingrepreßt wird.

Weiterhin ist es denkbar, in den Distanznoppen 4 ein Plättchen aus leicht verformbaren Material, wie beispielsweise Blei, Zinn, Aluminium, Kunststoff oder Gummi einzulegen, wobei nach Eintauchen des Stempels in den Distanznoppen 4 durch den Stempel ein Teilvolumen der weichen Einlegematerials radial nach außen in die Ausnehmung 18 der Ziehmatrize 11 verdrängt wird und damit entsprechend den vorangegangenen Ausführungsbeispielen den Durchmesser des Noppengrundes 8 gegenüber der Noppenöffnung 5 vergrößert.

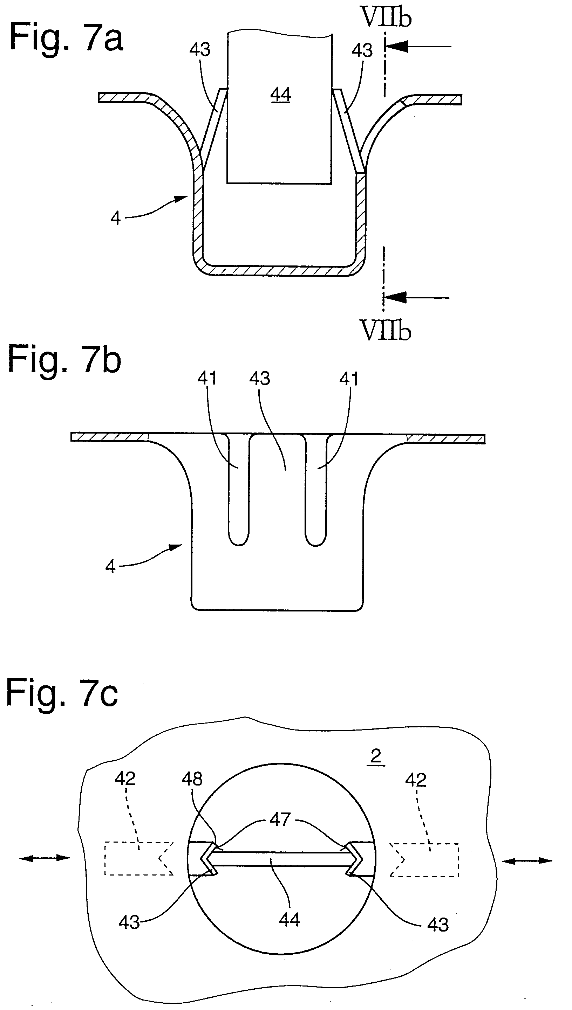

Fig. 5 und 7a-c zeigen Ausführungsbeispiele, bei denen die Verformung nicht den Noppengrund 8 des gezogenen Distanznoppens 4 betrifft, sondern die Noppenöffnung 5. Der Noppengrund 8 bzw. der Bereich des freien Endes 45 des Distanznoppens 4 bleibt bei seinem ursprünglichen Durchmesser, während der Bereich der Noppenöffnung 5 im Durchmesser zumindest an zwei Teilumfangsbereichen des Distanznoppens 4 verringert wird.

In Fig. 5 bestehen - in Abweichung zum bislang verwendeten Aufweitstempel - die Verformungsmittel aus zwei bezüglich der Noppenachse 33 gegenüberliegenden, quer zu dieser beweglichen, also radialbeweglichen Schiebern 34, die in die Ziehmatrize 11 für die Distanznoppen 4 integriert sind und mit ihren einander zugewandten Stirnseiten 35 in Nichtgebrauchsstellung einen Teil der Gravurwand 36 der Ziehmatrize 11 bilden. Zur Verformung des Distanznoppens 4 werden die Schieber 34 in Pfeilrichtung aufeinander zu geführt, wodurch der zylindrische Noppenhals 37 im Bereich der Noppenöffnung 5 zusammengedrückt wird und somit in eine strichlierte eingebeulte Endstellung gebracht wird. Das Ziehteil 2 wird bei der Verformung durch einen hier nicht dargestellten Niederhalter an der Ziehmatrize 11 festgehalten, wodurch verhindert wird, daß die den Distanznoppen 4 umgebende Fläche des Ziehteils 2 unter Zug verformt wird.

In Fig. 6 ist der Distanznoppen 4 von einem Ziehstempel mit sphärisch ausgebildeter Stirnseite gezogen worden, so daß der Noppengrund 8 des Distanznoppens 4 entsprechend sphärisch bzw. ballig ausgeformt ist. Die Ziehmatrize 11 ist in einen oberen und einen unteren Teil geteilt, wobei im unteren Teil die der Stirnseite des Ziehstempels formnegativ entsprechende Gravur eingearbeitet ist. Der untere Teil der Ziehmatrize 11 ist hier nicht dargestellt und ist zur Verformung des Noppengrundes 8 aus dem Verformungsbereich heraus verfahren worden. Die Trennlinie der Matrizenteile liegt in etwa auf Höhe des Übergangs des sphärischen Noppengrundes 8 zum zylindrischen Noppenhals 37. Zur Verformung wird auf den Noppengrund 8 ein das Verformungsmittel bildender Gegenstempel 38 geführt, der gemäß des Doppelpfeils koaxial zum Ziehstempel verschiebebeweglich verfahrbar ist und den Noppengrund 8 des von einem Niederhalter an der Ziehmatrize 11 unverrückbar gehaltenen Distanznoppen 4 in axialer Richtung in einer Stauchbewegung zurückdrückt. Dabei weicht das Material des Distanznoppens 4 seitlich gleichmäßig aus, wobei die den Distanznoppen 4 eingrenzende Unterkante 39 des oberen Matrizenteils 40 eine Biegekante für den vom Gegenstempel 38 verschobenen Teil des Distanznoppens 4 bildet. Durch die Biegekante wird eine gezielte Verformung zur Seite hin erleichtert. Der Durchmesser des Noppengrundes 8 wird somit gegenüber der Noppenöffnung 5 vergrößert. Das Anstauchen des Noppengrundes 8, bzw. des freien Endes 45 des vorgeformten, im wesentlichen zylindrischen Distanznoppens 4 ist gleichermaßen innerhalb einer den gezogenen Distanznoppen 4 umschließenden Ziehmatrize 11 denkbar, wobei jedoch in dieser entsprechende Ausnehmungen 18 vorgesehen sein müssen. Ebenfalls kann das Anstauchen in Zusammenwirkung des Gegenstempels mit dem Ziehstempel erfolgen, wobei dessen Stirnseite nicht unbedingt sphärisch ausgebildet sein muß. Bei einander zugewandten ebenen Stirnseiten von Ziehstempel und Gegenstempel erfolgt ein Verbreitern des ebenen Noppengrundes 8 mit Verringerung dessen Wandstärke. Auch kann an der Stirnseite des Ziehstempels ein Verdrängungspolster aus weichem, elastischem Material oder als elastischer Blähkörper mit einem Fluid gefüllt bestehen.

In Fig. 7a-c wird der gezogene Distanznoppen 4 an zwei gegenüberliegenden Teilumfangsbereichen mit einem Schneidwerkzeug, das im Werkzeugumfang der Herstellungsvorrichtung für den Distanznoppen 4 beinhaltet ist, mit jeweils zwei in engem Abstand nebeneinander liegenden, am Noppenhals 37 entlang verlaufenden vertikalen Einschnitten 41 versehen (Fig. 7b), die vom Öffnungsrand 9 der Noppenöffnung 5 ausgehen und sich zum Noppengrund 8 hin erstrecken. Die Verformungsmittel bilden zwei quer zur Noppenachse 33 bewegliche Schieber 42 (Fig. 7c) sind, mit denen die von den Einschnitten 41 begrenzten Blechlappen 43 zur Noppenachse 33 hin gebogen werden. Für eine definierte Biegestellung und damit für eine definierte Einstellung des Durchmessers der Noppenöffnung 5 an den verformten Teilumfangsbereichen ist ein Gegenhalter 44 vorgesehen, der in den Distanznoppen 4 axial eintaucht, wobei die Blechlappen 43 so weit nach innen gebogen werden, bis sie am Gegenhalter 44 anliegen (Fig. 7a und c). Dieses Ausführungsbeispiel ist besonders günstig bei gezogenen Distanznoppen 4, die, um leichter gezogen werden zu können und um Blecheinrisse im Ziehteil 2 am Ort des Distanznoppens 4 zu vermeiden, großzügig ausgerundete Ziehradien aufweisen. Die gebogenen Blechlappen 43 kompensieren dabei die durch derartige Ziehradien verringerte Stapelhöhe. Im übrigen ist es möglich, daß das Schneidwerkzeug von den Schiebern 42 gebildet wird, deren V-förmig ausgebildete Stirnseiten 47 mit einer umlaufenden randbildenden Schneidkante 48 versehen sind.

Es ist zur Herstellung der Ziehteile 2 denkbar, zuerst diese in eine wannenförmige Form tiefzuziehen und gleichzeitig die Distanznoppen 4 zu ziehen. Die Ziehstempel für die Distanznoppen 4 sind dabei in den Ziehstempel für die wannenförmige Form integriert und können mit diesem einteilig verbunden oder in diesem axial beweglich geführt sein. Ebenfalls ist es möglich, die Distanznoppen 4 in einem weiteren Ziehvorgang, der parallel zu einem weiteren Umformungsvorgang des Ziehteiles erfolgen kann, anschließend auszubilden. Auch kann die erfindungsgemäße Verformung des gezogenen Distanznoppens 4 schon parallel zu den Umformungsvorgängen des Ziehteiles 2 ablaufen. Weist die Ziehmatrize 11 keine Ausnehmung 49 auf, so muß zur problemlosen Entnahme des mit hinterschnittenen Distanznoppen 4 versehenen Ziehteils 2 die Ziehmatrize 11 zumindest zweiteilig ausgebildet sein, wobei die Trennebene der Matrizenteile vertikal und innerhalb des jeweiligen Distanznoppens 4 verlaufen muß. Ebenso ist für die Entnahme notwendig, daß die Matrizenteile seitlich auseinander- bzw. zusammenschiebbar sind.

Der Ziehstempel für den Distanznoppen 4 und der für dessen Verformung zuständige Aufweitstempel können identisch sein. Hiervon sind jedoch die Varianten ausgeschlossen, bei denen ein radialer Aufweitvorgang durch eine axiale Beaufschlagung des Noppengrundes durch die Stirnseite des Aufweitstempels erfolgt. Beim Ziehen des Distanznoppens 4 würde der Ziehstempel beim Auftreffen auf dem Ziehteil ansonsten gleichzeitig aufweitend tätig werden, was den Ziehvorgang grundlegend stören würde.

## Patentansprüche

1. Stapelbare Ziehteile, insbesondere aus Blech, mit in das Ziehteil integrierten wulstartig gezogenen Distanznoppen, die sich aus einer quer zur Aufstapelrichtung liegenden Wandung des Ziehteiles soweit erheben, daß die quer zur Aufstapelrichtung liegenden Wandungen der Ziehteile einen solchen gegenseitigen Abstand aufweisen, daß die spitzwinklig zur Aufstapelrichtung der Ziehteile liegenden Wandungen sich höchstens lose berühren und mit Sicherheit verklemmungsfrei ineinandergreifen, wobei die Distanznoppen an den Ziehteilen lagegleich angeordnet sind,
**dadurch gekennzeichnet**,
daß die im Stapel übereinander liegenden Distanznoppen (4) untereinander nach Bemaßung und Ausrichtung gleich ausgebildet sind und daß der Durchmesser der jeweiligen Noppenöffnung (5) auf mindestens einem Teilumfangsbereich kleiner ist als der Durchmesser der Distanznoppen (4) im Bereich des freien Noppenendes (45).

2. Stapelbare Ziehteile nach Anspruch 1,
**dadurch gekennzeichnet**,
daß der Durchmesser der Noppenöffnung (5) auf zwei gegenüberliegenden Teilumfangsbereichen des Distanznoppens (4) kleiner ist als der Durchmesser des Noppengrundes (8).

3. Stapelbare Ziehteile nach Anspruch 1,
**dadurch gekennzeichnet**,
daß der Noppengrund (8) eine zentrische Öffnung aufweist.

4. Verfahren zur Herstellung von stapelbaren Ziehteilen, insbesondere aus Blech, nach Anspruch 1, wobei Platinen zu einer wannenartigen Form tiefgezogen werden und wobei im Ziehteil wulstartige Distanznoppen gezogen werden, die sich aus einer quer zur Aufstapelrichtung liegenden Wandung des fertigumgeformten Ziehteiles soweit erheben, daß die quer zur Aufstapelrichtung liegenden Wandungen der Ziehteile einen solchen gegenseitigen Abstand aufweisen, daß die spitzwinklig zur Aufstapelrichtung der Ziehteile liegenden Wandungen sich höchstens lose berühren und mit Sicherheit verklemmungsfrei ineinandergreifen, wobei die Distanznoppen der Ziehteile im Stapel lagegleich übereinanderliegen,
**dadurch gekennzeichnet**,
daß der Bereich des freien Endes (45) der später im Stapel (1) übereinanderliegenden, nach Bemaßung und Ausrichtung gleich ausgebildeten Distanznoppen (4) gegenüber der Noppenöffnung (5) von innen aufgeweitet wird.

5. Verfahren nach dem **Oberbegriff** des Anspruches 4,
**dadurch gekennzeichnet**,
daß der Noppengrund (8) von außen in axialer Richtung der Distanznoppenachse (33) gestaucht wird.

6. Verfahren nach dem **Oberbegriff** des Anspruches 4,
**dadurch gekennzeichnet**,
daß der an die Noppenöffnung (5) sich unmittelbar anschließende Noppenhals (37) von außen zusammengedrückt wird.

7. Verfahren nach dem **Oberbegriff** des Anspruches 4,
**dadurch gekennzeichnet**,
daß am Distanznoppen (4) auf zumindest zwei gegenüberliegenden Teilumfangsbereichen durch von der Noppenöffnung (5) ausgehende und zum Noppengrund (8) hin verlaufende Einschnitte (41) Blechlappen (43) ausgebildet werden, die anschließend zur Noppenachse (33) hin gebogen werden.

8. Verfahren nach einem der Ansprüche 4 bis 7,
**dadurch gekennzeichnet**,
daß vor der Verformung im Noppengrund (8) eine zentrische Öffnung mit kleinerem Durchmesser als der der Noppenöffnung (5) vorgestanzt wird.

9. Vorrichtung zur Herstellung von stapelbaren, insbesondere aus Blech bestehenden Ziehteilen, welche einen Ziehstempel und eine Matrize zur Formgebung des Ziehteils und mehrere darin integrierte Noppenziehstempel und Noppenmatrizen zum Anformen von Distanznoppen enthält, wobei die einander zugewandten Stirnseiten des Noppenziehstempels und der Noppenmatrize lageentsprechend angeordnet und zueinander formnegativ ausgebildet sind, zur Durchführung des Verfahrens nach Anspruch 4,
**dadurch gekennzeichnet**,
daß der Noppenziehstempel und die Noppenmatrize (11) zum Anformen von Distanznoppen (4) drehfest angeordnet sind und zumindest der Noppenziehstempel axial beweglich geführt ist, und daß die Vorrichtung ein Verformungsmittel (10,23,29,34,38,42) zum radialen Aufweiten des Noppengrundes (8) gegenüber der Noppenöffnung (5) beinhaltet und die Noppenmatrize (11) mit einer Ausnehmung (18) zum Ausformen des hinterschnittenen Distanznoppens (4) versehen ist.

10. Vorrichtung nach Anspruch 9,
**dadurch gekennzeichnet**,
daß das Verformungsmittel aus einem Aufweitstempel (23) besteht, der in die gezogenen Distanznoppen (4) bis nahe des Noppengrundes (8) bei Verbleib der Distanznoppen (4) innerhalb der dem Noppenziehstempel zugeordneten Noppenziehmatrize (11) einfahrbar ist und der im Bereich seiner Stirnseite (25) mit radial beweglichen Aufweitschiebern (27) versehen ist, deren Radialbewegung über Schrägflächen von der Eintauchbewegung des Aufweitstempels (23) in den Distanznoppen (4) ableitbar ist.

11. Vorrichtung nach Anspruch 9,
**dadurch gekennzeichnet**,
daß das Verformungsmittel aus einem Aufweitstempel (23) besteht, der in die gezogenen Distanznoppen (4) bis nahe des Noppengrundes (8) bei Verbleib der Distanznoppen (4) innerhalb der dem Noppenziehstempel zugeordneten Noppenziehmatrize (11) einfahrbar ist und der im Bereich seiner Stirnseite (28) mit einer Platte (30) aus elastischem Material, vorzugsweise aus Hartgummi, versehen ist, welche sich unter axialer Belastung sich flachdrückend radial aufweitet.

12. Vorrichtung nach Anspruch 9,
**dadurch gekennzeichnet**,
daß das Verformungsmittel aus einem Aufweitstempel (10) besteht, der in die gezogenen Distanznoppen (4) bis nahe des Noppengrundes (8) bei Verbleib der Distanznoppen (4) innerhalb der dem Noppenziehstempel zugeordneten Noppenziehmatrize (11) einfahrbar ist und der im Bereich seiner Stirnseite (12) mit Austrittsöffnungen (16) zur Zufuhr eines fluidischen Durckmediums und im Bereich seiner Wurzel (46) mit einer Abdichtung (21) gegen das Druckmedium versehen ist.

13. Vorrichtung nach Anspruch 9,
**dadurch gekennzeichnet**,
daß das Verformungsmittel aus einem Gegenstempel (38) besteht, der koaxial zum Noppenziehstempel entgegen dessen Ziehrichtung auf den vorgeformten im wesentlichen zylindrischen Distanznoppen (4) in das freie Ende (45) anstauchender Weise führbar ist.

14. Vorrichtung nach einem der Ansprüche 10 bis 12,
**dadurch gekennzeichnet**,
daß der Aufweitstempel (10,23,29) mit dem Noppenziehstempel für die Distanznoppen (4) identisch ist.

15. Vorrichtung nach dem **Oberbegriff** des Anspruches 9,
**dadurch gekennzeichnet**,
daß der Noppenziehstempel und die Noppenmatrize (11) zum Anformen von Distanznoppen (4) drehfest angeordnet sind und zumindest der Noppenziehstempel axial beweglich geführt ist, und daß die Ziehmatrize (11) mit radialbeweglichen Schiebern (34) zum Einschnüren der Noppenöffnung (5) eines vorgeformten im wesentlichen zylindrischen Distanznoppens (4) versehen ist.

16. Vorrichtung nach dem **Oberbegriff** des Anspruches 9,
**dadurch gekennzeichnet**,
daß der Noppenziehstempel und die Noppenmatrize (11) zum Anformen von Distanznoppen (4) drehfest angeordnet sind und zumindest der Noppenziehstempel axial beweglich geführt ist, daß die Vorrichtung ein Schneidwerkzeug beinhaltet, mit dem an zumindest zwei gegenüberliegenden Teilumfangsbereichen des jeweiligen vorgeformten im wesentlichen zylindrischen Distanznoppens (4) ausgehend von dessen Öffnungsrand (9) jeweils zwei nebeneinanderliegende Einschnitte (41) ausbildbar sind, und daß die Vorrichtung zwei quer zur Noppenachse (33) bewegliche Schieber (42) enthält, mit denen die von den Einschnitten (41) begrenzten Blechlappen (43) zur Noppenachse (33) hin biegbar sind.
